# EUROPÄISCHE PATENTANMELDUNG

(11) **EP 1 759 753 A2**
(43) Veröffentlichungstag der Anmeldung: **07.03.2007**
(21) Anmeldenummer: 06120026.7
(22) Anmeldetag: 04.09.2006
(51) Int. Cl.: B01D 29/09, B01D 33/04

(54) **Filtereinrichtung**

(30) Priorität: 06.09.2005 DE 102005042412
(71) Anmelder: MANN+HUMMEL GmbH, 71638 Ludwigsburg (DE)
(72) Erfinder: Reynders, Luc, 3770 Riemst (BE); Peumans, Marcel, 3770 Riemst (BE)

(57) **Zusammenfassung**

Die Erfindung betrifft eine Filtereinrichtung, insbesondere zur Filtrierung von Kühlschmierflüssigkeit. Diese besteht aus einem Filterbehälter mit einem Zulauf für die zu filtrierende Flüssigkeit und einem Ablauf für die gefilterte Flüssigkeit sowie einem Filtermaterialband. Dieses Filtermaterialband ist im Filterbehälter umlaufend angeordnet und besteht aus einem Obertrum und einem Untertrum. Die zu filternde Flüssigkeit wird unterhalb des Untertrums zugeführt und zwischen Obertrum und Untertrum abgeleitet. Das Filtermaterial des Untertrums trennt die Rohflüssigkeit von der Reinflüssigkeit und vermeidet, dass aufschwimmende Partikel der Flüssigkeit in den Auslauf für die Reinflüssigkeit gelangen können.

## Beschreibung

### Technisches Gebiet

Die Erfindung betrifft eine Filtereinrichtung, insbesondere für Kühlschmierflüssigkeit nach dem Oberbegriff des unabhängigen Anspruches 1.

### Stand der Technik

Aus der EP 0 244 151 B1 ist ein Filtergerät bekannt. Dieses besteht aus einem Filterbehälter mit einem Einlauf für ungefilterte Flüssigkeit und einer Auslaufkammer am Boden des Filterbehälters. Zwischen dem Filterbehälter und der Auslaufkammer ist ein Filtermaterialband vorgesehen. Dieses liegt an einer Endloskettenmitnehmereinheit an, die durch den Filterbehälter verläuft. Ziel solcher Einrichtungen ist das Reinigen von Flüssigkeit, die z. B. durch Späne oder Schleifschlamm verschmutzt ist. Üblicherweise sinken innerhalb der Flüssigkeit die Schmutzpartikel zum Boden und werden dort von der Endloskettenmitnehmereinheit und dem Filtermaterialband mitgenommen und über einen Austragshals ausgetragen. Späne, die in der Industrie anfallen, sind teilweise fein und schwimmen auf der Flüssigkeit auf. Dies bedeutet, dass solche Späne nur schwer aus der Flüssigkeit entfernt und ausgetragen werden können.

Der Erfindung liegt die Aufgabe zugrunde, eine Filtereinrichtung der im Stand der Technik bekannten Art dahingehend zu verbessern, dass diese aus der Flüssigkeit auch kleine und/oder leichte Späne, insbesondere Aluminium- oder Magnesiumspäne, aber auch andere Materialien, die unter Umständen auf einer Flüssigkeit schwimmen, austrägt.

Diese Aufgabe wird durch die Merkmale des unabhängigen Anspruches 1 gelöst.

### Offenbarung der Erfindung

Der wesentliche Vorteil der Erfindung liegt darin, dass eine dynamische Abreinigung der Flüssigkeit über das Filtermaterialband erfolgt. Die Leistungsfähigkeit der Späneabscheidung durch eine solche Filtereinrichtung, die auch als Überlaufabscheider bezeichnet wird, arbeitet sehr zuverlässig. Als gereinigte Flüssigkeit wird auch solche Flüssigkeit verstanden, die zwar noch Schmutzanteile aufweist, jedoch aufgrund des Durchtrittes durch das Filtermaterialband von Grobschmutz gereinigt worden ist.

Gemäß einer Ausgestaltung der Erfindung ist eine Reinigungseinrichtung vorgesehen. Diese ist oberhalb des Flüssigkeitsniveaus angeordnet und besteht aus Sprühdüsen, die auf einem gemeinsamen Sprühkopf oder einer Sprühschiene angeordnet sind und das Filtermaterialband von Schmutz befreit. Der Antrieb des Filtermaterialbandes erfolgt über einen Motor, der ebenfalls oberhalb des Flüssigkeitsniveaus angeordnet ist.

Damit Schmutz jeglicher Art von dem Filtermaterialband mitgenommen wird, sind in einer bevorzugten Ausgestaltung der Erfindung an dem Filtermaterialband Mitnehmer vorgesehen. Diese sind quer zur Bewegungsrichtung des Filtermaterialbandes angeordnet. Schmutz, Späne und Ähnliches sowie Schlamm setzt sich üblicherweise am Boden des Filterbehälters ab. Zum Austrag dieses Schmutzes ist eine Endloskettenmitnehmereinheit in vorteilhafter Weise im Filterbehälter angeordnet. Diese transportiert den Schmutz über eine Schräge der Filterwand oder einem so genannten Austraghals aus der Flüssigkeit heraus nach oben und von dort über einen Fallschacht zu einem bereitstehenden Behälter.

In vorteilhafter Weise ist die Endloskettenmitnehmereinheit mit einem Antriebsmotor versehen, der im Bereich des Austraghalses angeordnet ist. Ferner kann im Bereich des Austraghalses eine Reinigungseinrichtung für die Einheit vorgesehen sein. Diese besteht ebenfalls aus einem Sprühkopf mit mehreren Sprühdüsen.

In einer weiteren Ausgestaltung der Erfindung ist vorgesehen, dass das Filtermaterialband mit Mitnehmern bestückt ist. Mitnehmer bedeutet Leisten oder beweglich angeordnete Stege, die dafür sorgen, dass der Schmutz zuverlässig in eine bestimmte Richtung innerhalb der Filtereinrichtung transportiert wird.

Es ist gemäß einer weiteren Ausgestaltung der Erfindung eine Endloskettenmitnehmereinheit im Filterbehälter vorgesehen. Diese ist in ähnlicher Weise aufgebaut wie in der EP 0 244 151, weist allerdings kein Filtermaterialband auf, sondern lediglich Mitnehmer, die dafür sorgen, dass der sich am Boden ansammelnde Schmutz ausgetragen wird.

Selbstverständlich besteht auch die Möglichkeit, hier ein Filtermaterialband vorzusehen und eine Reinflüssigkeitskammer unterhalb des Filtermaterialbandes anzuordnen. Auch diese Endloskettenmitnehmereinheit ist mit einem Antriebsmotor versehen, der schrittweise oder kontinuierlich die Kette transportiert.

Weiterbildungsgemäß kann im Bereich des Austraghalses eine Reinigungseinrichtung für diese Einheit vorgesehen sein, um den Schmutzaustragsgrad zu erhöhen.

Die Erfindung betrifft auch ein dynamisches Überlaufsystem gemäß Anspruch 8.

Diese und weitere Merkmale gehen nicht nur aus den Ansprüchen, sondern auch aus der Beschreibung und den Zeichnungen hervor.

### Kurze Beschreibung der Zeichnungen

Die Erfindung wird nachfolgend anhand von Ausführungsbeispielen näher erläutert. Es zeigt:
- Figur 1: einen Einsatz für eine Filtereinrichtung mit einer Trägerstruktur für ein Filtermaterialband,
- Figur 2: die Seitenansicht einer Filtereinrichtung in einer Schnittdarstellung, und
- Figur 3: eine Schnittdarstellung gemäß Schnitt A-A der Figur 2.

### Ausführungsform(en) der Erfindung

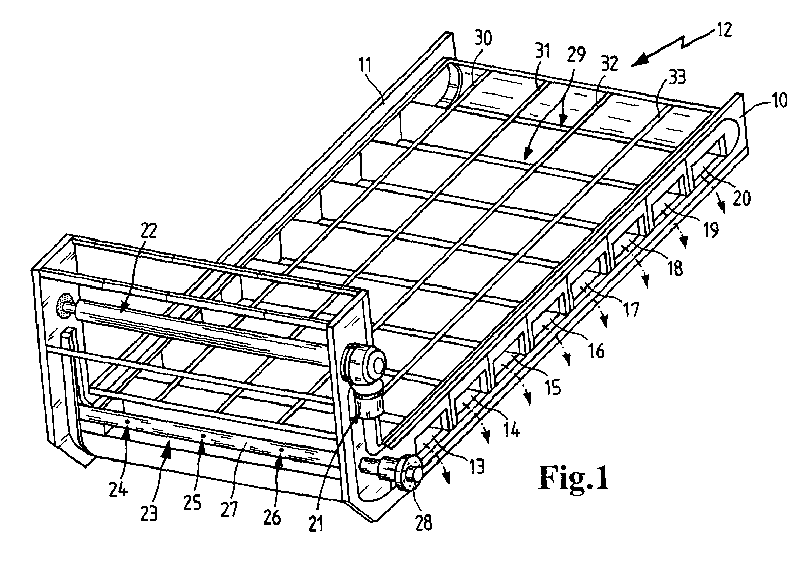

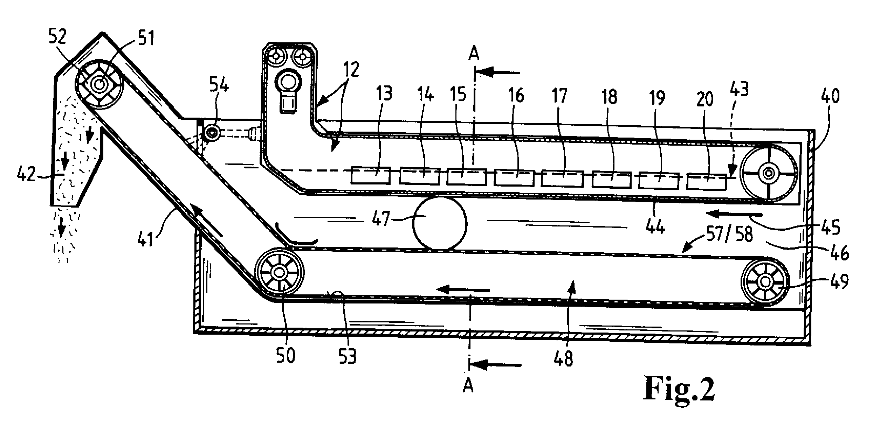

Figur 1 zeigt einen Einsatz mit einem Rahmen 12, bestehend aus zwei Seitenteilen 10, 11, welcher in einer zu Figur 2 weiter unten näher beschriebenen Filtereinrichtung eingebaut wird. Während das Seitenteil 11 geschlossen ist, weist das Seitenteil 10 Öffnungen 13 bis 20 auf. Die Seitenteile sind linksseitig nach oben abgekröpft, am Seitenteil 10 befindet sich im oberen abgekröpften Bereich ein Antriebsmotor 21, der eine Welle 22 antreibt, die in den Seitenteilen 10 und 11 drehbar gelagert ist. Es befindet sich linksseitig im abgekröpften Bereich ferner eine Reinigungseinrichtung 23. Diese besteht aus Sprühdüsen 24, 25, 26, die an einem gemeinsamen Rohr 27 angeordnet sind. Dieses Rohr ist mit einem Anschlussflansch 28 versehen und kann dort mit Reinflüssigkeit versorgt werden. Zwischen den Seitenteilen befindet sich ein Stützrahmen 29, bestehend aus Stegen und Auflagebändern 30, 31, 32, 33. Nicht dargestellt in Figur 1 ist ein Filtermaterialband, welches den Rahmen 12 umschließt, von dem Antriebsmotor 21 angetrieben wird und sowohl oberseitig als auch unterseitig an dem Stützrahmen 29 anliegt. Die Reinigungseinrichtung 23 befindet sich innerhalb des Filtermaterialbandes. Das Filtermaterialband sorgt dafür, dass sich zwischen dessen Obertrum und Untertrum ein Bereich gebildet wird, der lediglich über die Öffnungen 13 bis 20 zu einem Ablauf hin offen ist.

Figur 2 zeigt eine Filtereinrichtung, in welcher der Rahmen 12 gemäß Figur 1 eingebaut ist. Diese Filtereinrichtung besteht aus einem Filterbehälter 40, der kastenförmig aufgebaut ist, und einen Austraghals 41 aufweist zum Austragen des in dem Filterbehälter sich ansammelnden Schmutzes. Der Austraghals 41 trägt an seinem Ende einen Fallschacht 42, durch den der Schmutz nach unten in einen hier nicht gezeigten Auffangbehälter fällt. Innerhalb des Filterbehälters 40 befindet sich im oberen Bereich der Rahmen 12. Gleiche Teile sind mit gleichen Bezugszeichen versehen. Dieser Rahmen ist geringfügig unterhalb des maximalen Flüssigkeitspegels angeordnet. Ein auf dem Rahmen 12 umlaufend angeordnetes Filtermaterialband 44 weist die gemäß Pfeil 45 angedeutete Laufrichtung auf, d. h. das Untertrum des Filtermaterialbandes bewegt sich in Richtung Austraghals 41. An der Seitenwand 46 des Filterbehälters 40 ist eine Öffnung 47 für den Zulauf von Schmutzflüssigkeit vorgesehen. Innerhalb des Filterbehälters 40 befindet sich ferner eine Endloskettenmitnehmereinheit 48, bestehend aus einer Umlenkrolle 49, einer Umlenkrolle 50 und einer Antriebswelle 51 mit einem hier schematisch angedeuteten Antriebsmotor 52.

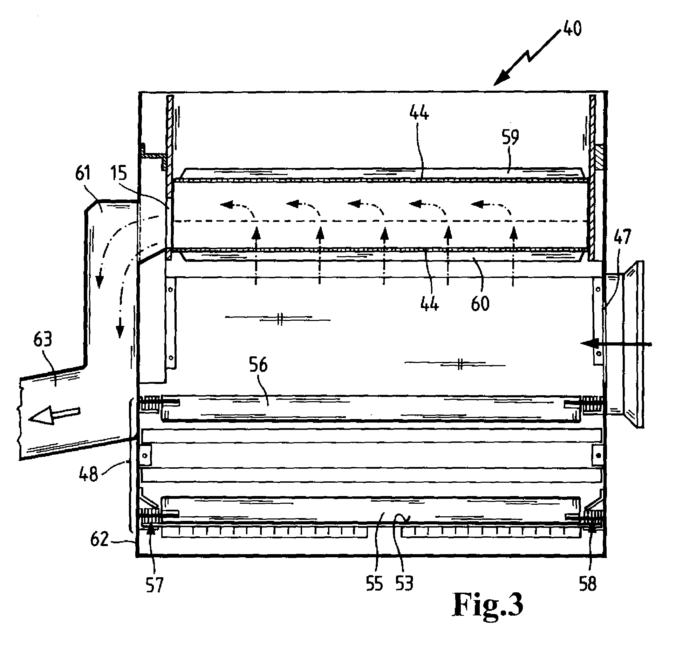

Die Endloskettenmitnehmereinheit 48 besteht aus zwei umlaufenden Ketten 57, 58 (siehe auch Figur 3), die im Bereich der Seitenwände des Filterbehälters 40 angeordnet sind. Zwischen den Ketten sind - wie in Figur 3 näher dargestellt - Mitnehmer 55, 56 eingespannt. Die zu filtrierende Flüssigkeit strömt über die Öffnung 47 ein und weist einerseits Schmutzbestandteile auf, die nach unten absinken, andererseits weist diese Flüssigkeit auch Späne mit einer sehr feinen Struktur auf, die - sofern es sich um Aluminium- oder Magnesiumspäne oder ähnliche Späne aus anderen Werkstoffen, die eine relativ geringe Dichte besitzen, handelt - oben aufschwimmen. Durch das Filtermaterialband 44 gelangen die Späne nicht bis auf die Höhe des Flüssigkeitspegels 43, sondern bis an das Filtermaterialband 44 und werden von diesem in Transportrichtung in Richtung des Austraghalses 41 mitgenommen. Das Filtermaterialband verhindert somit, dass Späne oder Grobschmutz zwischen Obertrum und Untertrum gelangen. Da der Flüssigkeitspegel sich jedoch zwischen diesen beiden Bandabschnitten einpendelt, wird die Flüssigkeit über die in Figur 1 gezeigten Öffnungen 13 bis 20 seitlich abströmen. Diese Öffnungen sind mit einer geeigneten Auffangvorrichtung versehen, so dass die hierüber gereinigte Flüssigkeit einer weiteren Filtrierung oder direkt in das Flüssigkeitssystem für Reinflüssigkeit zugeführt werden kann.

Die in Richtung Austraghals transportierten Späne verdichten sich im linksseitigen Bereich und sinken aufgrund der Verdichtung nach unten auf den Boden 53 des Filterbehälters ab. Dort werden die Späne und der sich am Boden 53 ansammelnde Schmutz durch die Mitnehmereinheit 48 zum Austraghals und zum Fallschacht 42 transportiert.

Die Endloskettenmitnehmereinheit 48 mit den umlaufenden Ketten 57, 58 (siehe auch Figur 3) und Mitnehmern gelangt unter einem Sprühkopf 54 hindurch und wird dort bei Bedarf mittels mehrerer Sprühdüsen abgereinigt.

Figur 3 zeigt den Schnitt A-A gemäß Figur 2. Die Endloskettenmitnehmereinheit 48 ist - wie bereits erwähnt - mit Mitnehmern 55, 56 bestückt. Dieses sind Winkelschienen oder Flachschienen, die zwischen den Transportketten 57, 58 eingehängt sind und über die Transportketten bewegt werden. Die Mitnehmer haben unmittelbaren Kontakt zum Boden 53 des Filterbehälters, so dass der sich am Boden ansammelnde Schmutz zuverlässig ausgetragen wird. Auch das Filtermaterialband 44 weist Mitnehmer 59, 60 auf, die beispielsweise einen gewissen Abstand voneinander besitzen. Zweckmäßigerweise sind diese derart beabstandet, dass sich mindestens fünf bis acht Mitnehmer im Bereich des Untertrums des Filtermaterialbandes 44 befinden. Die Öffnungen 13 bis 20 (im Schnitt A-A ist die Öffnung 15 dargestellt) stehen mit einem Auslauf 61 in der Seitenwand 62 des Filterbehälters 40 in Verbindung. Dieser Auslauf 61 geht über in ein Rohr 63 für die abzuleitende Flüssigkeit. Die zu reinigende Flüssigkeit strömt über die Öffnung 47 in Pfeilrichtung in den Filterbehälter 40 ein und strömt durch die Öffnungen 13 bis 20 (siehe auch Figur 1 und 2) aus dem Filterbehälter aus. Das Filtermaterialband 44 sorgt dafür, dass über den Auslauf 61 keine ungefilterte Flüssigkeit, vor allem keine Flüssigkeit mit aufschwimmenden Bestandteilen, ausgeleitet werden.

## Patentansprüche

1. Filtereinrichtung, insbesondere zur Filtrierung von Kühlschmierflüssigkeit, bestehend aus einem Filterbehälter mit einem Zulauf für die zu filtrierende Flüssigkeit und einem Ablauf für die gefilterte Flüssigkeit sowie einem Filtermaterialband, welches im Filterbehälter umlaufend angeordnet ist und aus einem Obertrum und einem Untertrum besteht, wobei die zu filternde Flüssigkeit unterhalb des Untertrums zugeführt wird und zwischen Obertrum und Untertrum Auslauföffnungen vorgesehen sind und wobei das Filtermaterial des Untertrums die Rohflüssigkeit von der Reinflüssigkeit trennt und die Reinflüssigkeit über diese Auslauföffnungen zu dem Ablauf für die gefilterte Flüssigkeit leitet.

2. Filtereinrichtung nach Anspruch 1, **dadurch gekennzeichnet, dass** das Filtermaterialband über eine Umlenkung zu einer oberhalb des Flüssigkeitsniveaus angeordneten Reinigungseinrichtung geführt wird und insbesondere oberhalb des Flüssigkeitsniveaus ein Antrieb für das Filtermaterialband vorgesehen ist.

3. Filtereinrichtung nach Anspruch 2, **dadurch gekennzeichnet, dass** die Reinigungseinrichtung aus Sprühdüsen besteht, die auf einem gemeinsamen Sprühkopf angeordnet sind.

4. Filtereinrichtung nach einem der vorherigen Ansprüche, **dadurch gekennzeichnet, dass** entlang des Filtermaterialbandes Mitnehmer vorgesehen sind, die quer zur Bewegungsrichtung des Filtermaterials angeordnet sind und einen Abtransport des in der zu filternden Flüssigkeit enthaltenen Schmutzes bewirken.

5. Filtereinrichtung nach einem der vorherigen Ansprüche, **dadurch gekennzeichnet, dass** eine Endloskettenmitnehmereinheit im Filterbehälter vorgesehen ist, welche den sich am Boden des Filterbehälter ansammelnden Schmutz über einen Austraghals aus der zu filternden Flüssigkeit austrägt.

6. Filtereinrichtung nach Anspruch 5, **dadurch gekennzeichnet, dass** die Endloskettenmitnehmereinheit einen Antriebsmotor aufweist, der im Bereich des Austraghalses angeordnet ist.

7. Filtereinrichtung nach einem der vorherigen Ansprüche, **dadurch gekennzeichnet, dass** im Bereich des Austraghalses eine Reinigungseinrichtung für die Endloskettenmitnehmereinheit vorgesehen ist und diese aus einem Sprühkopf mit mehreren Sprühdüsen besteht.

8. Dynamisches Überlaufsystem oder Vorabscheider in einem Filtersystem zur Filtration von Kühlschmiermitteln, wobei der Vorabscheider eine separate Vorrichtung ist, die im oberen Teil des Filtersystems angeordnet ist, und dieser Vorabscheider eine Überlaufvorrichtung aufweist, welcher im Bereich eines Umlaufbandes aus Filtermaterial angeordnet ist, das an beiden Seiten der Vorrichtung mit einer Transportkette verbunden ist, wobei das Umlaufband mit einem Antriebsmotor über Kettenräder in Bewegung gesetzt wird.
